# FASCICULE DE BREVET EUROPEEN

(11) **EP 2 594 038 B1**
(45) Date de publication et mention de la délivrance du brevet: **30.08.2017**
(21) Numéro de dépôt: 11741254.4
(22) Date de dépôt: 27.06.2011
(51) Int. Cl.: H04L 12/26, H04L 12/28, H04L 29/08, H04L 12/24

(54) **DÉTECTION D'UN MODULE DE CONTRÔLE UPNP**
DETEKTION EINES UPNP STEUERUNGSMODULS
DETECTION OF AN UPNP CONTROL MODULE

(30) Priorité: 15.07.2010 FR 1055771
(43) Date de publication de la demande: 22.05.2013
(73) Titulaire: Orange, 75015 Paris (FR)
(72) Inventeur: FONTAINE, Fabrice, F-35850 Geveze (FR); BARANSKI, Fabrice, F-35000 Rennes (FR)
(86) Numéro de dépôt international: PCT/FR2011/051484
(87) Numéro de publication internationale: WO 2012/007665

(56) Documents cités:
- WO-A1-2004/039005
- US-A1- 2009 210 525
- "Proposed publication of ANSI/CEA-851-ATitle: Versatile Home Network", EIA/TIA DRAFTS, TELECOMMUNICATIONS INDUSTRY ASSOCIATION, ARLINGTON, VA, US, 4 avril 2006 (2006-04-04), XP000002658561,

## Description

### Domaine de l'invention

Le domaine de l'invention se rapporte au domaine des réseaux de télécommunication, et plus particulièrement aux réseaux dans lesquels les terminaux communiquent via le protocole UPnP défini par l'UPnP Forum. Il peut s'agir par exemple d'un réseau domestique (en anglais "home network"), ou d'un réseau local (LAN ou Local Area Network).

### Arrière-plan de l'invention

De façon connue, le protocole UPnP vise à permettre l'interopérabilité et l'interconnexion d'équipements multimédia, sans configuration par l'utilisateur.

Dans la suite de la description, on parlera de réseau UPnP pour désigner un ensemble d'équipements interconnectés entre eux par un réseau et utilisant le protocole UPnP pour communiquer entre eux à travers ce réseau.

Un dispositif est dit dispositif UPnP s'il est apte à communiquer au moyen d'un protocole de commande conforme au standard UPnP ou à un autre standard équivalent ou dérivé et/ou met en oeuvre une ou des fonctions définies dans un tel standard.

On distingue généralement dans les architectures UPnP différents types de dispositifs UPnP : les modules de contrôle CP (Control Point), les serveurs de contenu MS (Media Server) et les dispositifs de restitution de contenu MR (Media Renderer).

Dans un réseau UPnP, le dispositif de contrôle CP a un rôle central en ce qu'il permet de détecter les autres dispositifs UPnP, pour recevoir des événements depuis ces dispositifs et les commander en leur envoyant des actions UPnP.

Selon un premier exemple, la technologie UPnP AV (pour 'Universal Plug and Play Audio and Video') qui implique généralement au moins un MS, un module de contrôle CP et un MR, le module de contrôle CP, lorsqu'il est couplé à une interface homme-machine, permet à un utilisateur de consulter une liste de contenus disponibles sur différents MS, de sélectionner un contenu (vidéo, audio, image) mis à disposition par un des MS et de le diffuser sur le MR de son choix.

Conformément à ce premier exemple :
- le MS consiste par exemple en un ordinateur, une passerelle domestique, un routeur,
- le MR consiste par exemple en un téléviseur relié à un décodeur de type Set-Top-Box, une chaîne Hi-Fi, une console de jeux, un ordinateur, etc...,
- le CP est généralement localisé dans le MR mais peut également consister en un dispositif UPnP indépendant, tel que par exemple un téléphone mobile, une télécommande, etc...

Selon un deuxième exemple, la technologie UPnP Telephony, actuellement en cours de développement, implique généralement au moins un dispositif contenant une application appelée « UPnP Telephony Server » qui offre des fonctions de téléphonie, un module de contrôle CP, et un dispositif contenant une application appelée « UPnP Telephony Client » qui est adaptée pour restituer ou simplement afficher du contenu (vidéo, audio, image). Le module de contrôle CP permet en particulier à un utilisateur de lancer un appel téléphonique à partir du dispositif contenant l'application « UPnP Telephony Server », puis, au cours de la conversation téléphonique engagée avec l'appelé, de pouvoir recevoir de ce dernier un contenu (vidéo, audio, image) sur l'équipement de son choix, en commandant le dispositif contenant l'application « UPnP Telephony Client », pour que ce dernier reçoive le contenu sélectionné provenant du dispositif contenant l'application « UPnP Telephony Server », lequel est apte à recevoir ce contenu de l'appelé.

Conformément à ce deuxième exemple :
- l'application « UPnP Telephony Server » consiste par exemple en un téléphone de type mobile ou fixe, une passerelle domestique contenant un module de téléphonie, tel que par un exemple un module VoIP, etc...
- l'application « UPnP Telephony Client » consiste par exemple en un téléviseur relié à un décodeur de type Set-Top-Box, une chaîne Hi-Fi, une console de jeux, un ordinateur, etc...,
- le CP est généralement localisé dans un dispositif UPnP indépendant, tel que par exemple un téléphone mobile, une télécommande, etc...

Selon un troisième exemple, la technologie UPnP IGD (pour 'Universal Plug and Play Internet Gateway Device') permet à un module de contrôle CP, généralement localisé dans une passerelle domestique ou un routeur comportant une application IGD, de commander cette application de façon à afficher l'état de la connexion Internet (ex : ADSL) de la passerelle ou du routeur, ou bien de configurer des règles de NAT (pour « Network Address Translation ») ou le parefeu de la passerelle ou du routeur concerné.

Un inconvénient des trois types de technologie UPnP précités réside dans le fait qu'il n'existe pas actuellement de solution technique satisfaisante pour détecter aisément la déconnexion, volontaire ou non, d'un module de contrôle UPnP.

Ainsi, selon le premier exemple précité de la technologie UPnP AV, en cas de déconnexion, volontaire ou non, du module de contrôle UPnP, la diffusion du contenu depuis le MS vers le MR choisis par l'utilisateur n'est pas pour autant interrompue.

Or une telle poursuite de la diffusion peut s'avérer problématique car elle introduit un encombrement inutile du réseau. Elle n'est par ailleurs pas souhaitée dans le cadre de la diffusion d'un contenu protégé.

Le même problème survient également dans le deuxième exemple précité de la technologie UPnP Telephony, s'agissant de la poursuite de la diffusion d'un contenu depuis le dispositif contenant l'application « UPnP Telephony Server » vers le dispositif contenant l'application « UPnP telephony Client ».

Selon le troisième exemple précité de la technologie UPnP IGD, dans le cas de la déconnexion, volontaire ou non, du module de contrôle UPnP, la règle de NAT créée par l'application IGD au moment de la connexion du module de contrôle UPnP, dans la passerelle ou le routeur, n'est pas pour autant supprimée. De ce fait, la table qui mémorise les règles de NAT dans la passerelle ou le routeur grossit à chaque fois qu'un dispositif de contrôle UPnP se connecte, ce qui finit par entraîner un mauvais fonctionnement de la passerelle ou du routeur, dont les ressources sont consommées inutilement.

Un tel problème entraîne au final une insatisfaction du client qui oblige ce dernier à contacter le service d'assistance de son opérateur.

Le document WO 2009/002037 propose une solution technique visant à détecter la connexion/déconnexion d'un module de contrôle UPnP.

Des travaux sont également en cours dans le groupe de travail UPnP Telephony en vue de parvenir à une telle détection.

Toutefois, les solutions techniques envisagées sont relativement lourdes puisqu'elles impliquent nécessairement une modification du standard UPnP, par ajout de nouveaux messages signalant la connexion et la déconnexion des dispositifs de contrôle UPnP.

L'ajout de ces nouveaux messages entraîne en outre obligatoirement une modification logicielle des dispositifs UPnP pour que ces derniers soient aptes à lire, puis à interpréter ces nouveaux messages, qu'il s'agisse des modules de contrôle UPnP ou des autres dispositifs UPnP (MR, MS, dispositif contenant une application IGD, etc...) aptes à être mis en relation avec ces derniers.

### Objet et résumé de l'invention

Un des buts de l'invention est de remédier à des inconvénients de l'état de la technique précité.

A cet effet, selon un premier aspect, la présente invention concerne un procédé de surveillance d'un module de contrôle dans un réseau, comprenant les étapes suivantes :
- mise en relation, via le réseau, du module de contrôle avec un dispositif présent dans le réseau,
- déconnexion du module de contrôle.

Un tel procédé est remarquable en ce qu'il comprend une étape de détection de la déconnexion du module de contrôle, comprenant :
- l'envoi, depuis le dispositif présent dans le réseau vers le module de contrôle, d'un message indiquant la présence dans le réseau d'un dispositif factice, d'un type adapté à être reconnu par le module de contrôle,
- la détermination, au niveau du dispositif présent dans le réseau, de l'absence de réception, en provenance du module de contrôle, d'une requête d'accès au dispositif associé à l'identifiant factice.

Une telle disposition permet ainsi d'effectuer simplement la détection de la déconnexion d'un module de contrôle, en particulier UPnP, tout en restant conforme au standard UPnP.

En outre, une telle détection n'entraîne aucune modification, matérielle ou logicielle, du module de contrôle UPnP.

La détection de la déconnexion est effectuée avantageusement à l'initiative d'un dispositif UPnP ayant été préalablement mis en relation avec le module de contrôle UPnP. Le dispositif UPnP se contente uniquement de renvoyer au module de contrôle UPnP un message standard UPnP, dans lequel l'identifiant du dispositif UPnP présent sur le réseau est simplement remplacé par l'identifiant factice d'un dispositif UPnP factice. Dans le cas où le dispositif UPnP n'intercepte aucune requête d'accès de la part du module de contrôle UPnP auprès du dispositif UPnP factice, le dispositif UPnP en déduit aisément que le module de contrôle UPnP est déconnecté. Une telle disposition n'entraîne ainsi que des modifications logicielles très légères des dispositifs UPnP conformes à l'invention.

Dans un mode de réalisation, lorsqu'une action a été invoquée par le module de contrôle auprès du dispositif présent dans le réseau, postérieurement à l'étape de mise en relation précitée, une telle action est supprimée par le dispositif présent dans le réseau à la suite de l'étape de détermination précitée.

Une telle disposition permet ainsi de supprimer les actions devenues inutiles du fait de la déconnexion du module de contrôle.

En particulier dans le cas des technologies UPnP AV ou UPnP Telephony, où de telles actions consistent notamment en la diffusion de contenu dans le réseau, il est ainsi possible d'éviter tout encombrement inutile du réseau.

Une telle disposition est également adaptée à la technologie UPnP IGD, où de telles actions consistent notamment en la création de règles de NAT, lesquelles sont avantageusement supprimées à chaque fois qu'une déconnexion d'un module de contrôle UPnP est détectée par un dispositif UPnP (ex : passerelle ou routeur) préalablement mis en relation avec ce dernier. Grâce à l'invention, les ressources du dispositif UPnP précité s'en trouvent ainsi grandement préservées.

Dans un autre mode de réalisation, l'étape d'envoi du message indiquant la présence dans le réseau d'un dispositif factice est effectuée de façon répétitive, postérieurement à l'étape de mise en relation précitée, le procédé selon l'invention comprenant les étapes suivantes lorsque le module de contrôle est encore connecté au réseau :
- envoi, depuis le module de contrôle, d'une requête d'accès au dispositif factice,
- interception, au niveau du dispositif présent dans le réseau, de la requête envoyée.

Une telle disposition permet ainsi au dispositif ayant été mis préalablement en relation avec le module de contrôle, de détecter régulièrement la connexion effective de ce dernier, grâce à l'interception, par le dispositif, de la requête d'accès au dispositif factice envoyée par le dispositif de contrôle.

Dans encore un autre mode de réalisation, à la suite de l'étape d'interception précitée, le procédé selon l'invention comprend une étape d'envoi, depuis le dispositif présent dans le réseau, d'un message d'erreur au module de contrôle.

Une telle disposition permet au dispositif, ayant intercepté la requête d'accès au dispositif factice envoyée par le module de contrôle, de leurrer ce dernier en lui faisant croire que le dispositif factice est en fait un dispositif présent dans le réseau, mais qui ne fonctionne pas.

De cette manière, le module de contrôle ne garde pas en mémoire l'identifiant associé à ce dispositif factice. Ainsi, le module de contrôle ne peut plus tenter d'envoyer par la suite de nouvelles requêtes d'accès au dispositif factice, ce qui risquerait d'encombrer inutilement le réseau.

Dans encore un autre mode de réalisation, au niveau du dispositif présent dans le réseau, le procédé selon l'invention comprend une étape d'enregistrement d'un identifiant du module de contrôle, un tel identifiant étant ensuite associé :
- soit à un état de connexion du module de contrôle, à la suite de l'étape d'interception, par le dispositif présent dans le réseau, de la requête d'accès au dispositif factice,
- soit à un état de déconnexion, à la suite de l'étape de détermination, par le dispositif présent dans le réseau, de l'absence de réception, en provenance du module de contrôle, d'une requête d'accès au dispositif factice.

Une telle disposition permet au dispositif, en particulier UPnP, d'avoir une visibilité en temps réel de l'état de connexion ou non du module de contrôle.

Corrélativement, selon un second aspect, la présente invention concerne un dispositif apte à être mis en relation, via un réseau, avec un module de contrôle.

Le dispositif selon l'invention est remarquable en ce qu'il comprend des moyens de détection de déconnexion du module de contrôle précité, les moyens de détection comprenant :
- des moyens d'émission pour envoyer au module de contrôle un message indiquant la présence dans le réseau d'un dispositif factice, d'un type adapté à être reconnu par le module de contrôle,
- des moyens de traitement pour déterminer l'absence de réception, en provenance du module de contrôle, d'une requête d'accès au dispositif factice.

Dans un mode de réalisation, le dispositif selon l'invention comprend en outre des moyens de suppression d'une action invoquée par le module de contrôle auprès du dispositif, après établissement de leur mise en relation, de tels moyens de suppression étant activés lorsque les moyens de traitement déterminent l'absence de réception, en provenance du module de contrôle, d'une requête d'accès au dispositif factice.

Dans un autre mode de réalisation, les moyens d'émission du dispositif selon l'invention sont adaptés pour envoyer de façon répétitive au module de contrôle, après établissement de la mise en relation de ce dernier avec le dispositif, un message indiquant la présence dans le réseau d'un dispositif factice, le dispositif comprenant en outre des moyens d'interception de toute requête d'accès envoyée au dispositif factice par le module de contrôle, lorsque ce dernier est encore connecté au réseau.

Dans encore un autre mode de réalisation, les moyens d'émission du dispositif selon l'invention sont en outre adaptés pour envoyer un message d'erreur au module de contrôle, en réponse à la requête d'accès envoyée par ce dernier.

Dans encore un autre mode de réalisation, le dispositif selon l'invention comprend en outre des moyens de mémorisation pour enregistrer au moins un identifiant du module de contrôle, un tel identifiant étant associé :
- soit à un état de connexion du module de contrôle, lorsque les moyens d'interception du dispositif interceptent une requête d'accès envoyée par le module de contrôle au dispositif factice,
- soit à un état de déconnexion du module de contrôle, lorsque les moyens de traitement du dispositif déterminent l'absence de réception, en provenance du module de contrôle, d'une requête d'accès au dispositif factice.

Dans encore un autre mode de réalisation, les moyens d'émission du dispositif selon l'invention utilisent le protocole UPnP.

L'invention vise également un programme d'ordinateur comportant des instructions pour l'exécution des étapes du procédé de surveillance d'un module de contrôle mentionné ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Encore un autre objet de l'invention vise aussi un support d'enregistrement lisible par un ordinateur, et comportant des instructions de programme d'ordinateur tel que mentionné ci-dessus.

Le support d'enregistrement peut être n'importe quelle entité ou dispositif capable de stocker le programme. Par exemple, un tel support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, un tel support d'enregistrement peut être un circuit intégré dans lequel le programme est incorporé, le circuit étant adapté pour exécuter le procédé en question ou pour être utilisé dans l'exécution de ce dernier.

Le dispositif et le programme d'ordinateur précités présentent au moins les mêmes avantages que ceux conférés par le procédé selon la présente invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une représentation de l'architecture générale dans laquelle est mis en oeuvre le procédé de surveillance d'un module de contrôle, selon un mode de réalisation de l'invention;
- la figure 2 représente un ordinogramme du procédé de surveillance d'un module de contrôle conforme à l'invention.

### Description détaillée d'un mode de réalisation

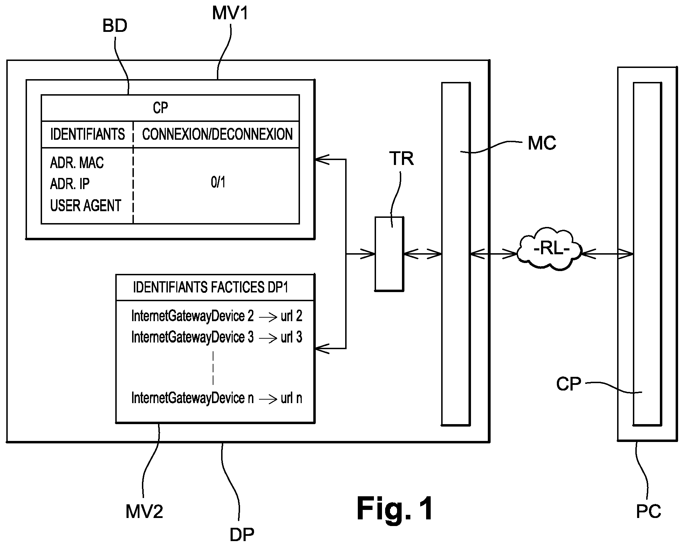

La **figure 1** représente de façon générale, selon un mode de réalisation, le système de surveillance, dans lequel est mis en oeuvre le procédé de surveillance d'un module de contrôle selon l'invention.

La présente invention est décrite par la suite dans son application aux réseaux de type UPnP. Elle peut aisément être mise en oeuvre dans tout type de réseau UPnP, tel que par exemple UPnP AV, UPnP Telephony, UPnP IGD, etc...

Selon l'invention et conformément à l'exemple représenté sur la **figure 1****,** le système de surveillance est situé dans un réseau local RL qui comprend au moins :
- un module de contrôle UPnP, noté CP,
- un dispositif UPnP, noté DP, apte à être mis en relation avec le module de contrôle UPnP, CP.

Dans l'exemple représenté, le module de contrôle CP est un point de contrôle UPnP tout à fait classique (« Control Point » en anglais). Comme cela a été mentionné plus haut dans la description, le module de contrôle CP est localisé dans un dispositif de type MR (téléviseur relié à un décodeur de type Set-Top-Box, chaîne Hi-Fi, console de jeux, ordinateur, passerelle, routeur, etc...).

A titre d'alternative, le module de contrôle CP pourrait consister en un dispositif UPnP indépendant, tel que par exemple un téléphone mobile, une télécommande, etc...

De façon usuelle, le module de contrôle CP est apte à être identifié dans le réseau local par les dispositifs UPnP présents dans le réseau local, à l'aide de ses identifiants physique et réseau, tels qu'en particulier son adresse IP, son adresse MAC ou bien son en-tête HTTP : « USER-AGENT ».

Plus précisément dans l'exemple représenté, le module de contrôle CP est localisé dans un ordinateur de type PC comprenant différentes applications UPnP (client torrent, client de messagerie, etc...) et fonctionnant par exemple sous le système d'exploitation Windows 7.

Toujours en référence à la **figure 1**, le dispositif UPnP, DP, est quant à lui adapté pour être mis en relation avec le module de contrôle CP, conformément au standard UPnP, afin d'être commandé par le module de contrôle CP, suite à l'envoi par ce dernier d'actions UPnP. Selon la technologie UPnP utilisée, le dispositif DP peut être localisé dans un dispositif de type MR, MS, Telephony Server, ou bien encore dans un ordinateur, une passerelle, un routeur, un dispositif de stockage installé dans le réseau RL, tel qu'en particulier un dispositif de type NAS (de l'anglais « Network Attached Storage »).

Plus précisément dans l'exemple représenté, le dispositif DP est localisé dans une passerelle domestique apte à interconnecter le réseau local RL à un réseau étendu de type Internet (non représenté).

Le réseau local RL consiste par exemple en un réseau domestique constitué partiellement ou totalement de segments sans fil.

A titre d'alternative, le réseau local pourrait consister en un réseau local d'entreprise.

De façon connue en tant que telle, le dispositif DP comprend un module de communication MC qui est un module logiciel apte à dialoguer avec le module de contrôle CP, afin de lui envoyer des appels de fonctions, notifications ou messages conformément au standard UPnP, ou bien recevoir en provenance de ce dernier des actions UPnP.

De telles actions consistent par exemple en des commandes HTTP qui sont nommées différemment en fonction de la technologie UPnP utilisée.

Dans le cas par exemple de la technologie UPnP AV, le module de contrôle CP est apte à envoyer au dispositif DP :
- une première requête HTTP nommée « Browse » en anglais, en vue d'obtenir un chemin de navigation vers un contenu numérique requis par l'utilisateur,
- une seconde requête HTTP nommée « GET » en anglais, en vue d'obtenir le contenu numérique requis.

Le chemin de navigation est généralement fourni sous la forme d'une adresse URI (« Uniform Resource Identifier »).

Cette adresse URI comprend une identification du dispositif DP (ex : Media Server) auprès duquel le contenu numérique considéré est susceptible d'être obtenu, ainsi qu'une identification du contenu numérique proprement dite.

Dans le cas par exemple de la technologie UPnP Telephony, le module de contrôle CP est apte à envoyer au dispositif DP une requête HTTP, nommée « StartCall » en anglais, auprès d'une URI du dispositif DP qui identifie ce dernier comme étant un dispositif contenant une application « Telephony Server », afin de lancer un appel téléphonique vers un correspondant de l'utilisateur.

Dans le cas par exemple de la technologie UPnP IGD, le module de contrôle CP est apte à envoyer au dispositif DP une requête HTTP, nommée « AddPortMapping » en anglais, auprès d'une URI du dispositif DP qui identifie ce dernier comme étant une passerelle ou un routeur contenant une application IGD, de façon à créer une règle de NAT dans la passerelle ou le routeur.

A cet effet, dans l'exemple représenté, le dispositif DP, qui est une passerelle, est identifié par la terminologie UPnP « InternetGatewayDevice » et une adresse d'accès telle qu'un lien URL (« Uniform Resource Locator »).

Afin que le dispositif DP puisse être distingué par le module de contrôle CP des autres dispositifs UPnP de même type (non représentés) qui sont susceptibles de se connecter au réseau local RL, le dispositif DP est associé à l'identifiant physique particulier nommé « InternetGatewayDevice 1 » et au lien URL particulier nommé « url1 ».

Selon l'invention, Le dispositif DP comprend une mémoire vive MV1, dans laquelle sont stockés les identifiants physique et réseau du module de contrôle CP, une fois que le dispositif DP a été mis en relation avec ce dernier.

Les identifiants physique et réseau sont aptes à être enregistrés dans une base de données BD, contenue dans la mémoire vive MV1, en association avec l'état courant de connexion/déconnexion du module de contrôle CP, un tel état étant détecté par le dispositif DP d'une façon qui sera détaillée ultérieurement dans la suite de la description.

Le dispositif DP comprend en outre une autre mémoire vive MV2, dans laquelle est stockée une pluralité d'identifiants physiques nommés « InternetGatewayDevice 2 », « InternetGatewayDevice 3 », ..., « InternetGatewayDevice n » qui sont associés respectivement à des liens URL nommés « url2 », « url3 »,..., « urln ».

De tels identifiants sont fictifs, en ce sens qu'ils ne correspondent à aucun dispositif UPnP susceptible d'être présent dans le réseau local RL, et en particulier à aucune passerelle susceptible d'être découverte par le module de contrôle CP.

A titre d'alternative, les identifiants fictifs précités peuvent être stockés également dans la mémoire vive MV1.

Le dispositif DP comprend par ailleurs un module de traitement TR auquel tous les éléments du dispositif DP sont reliés et qui est destiné à en commander le fonctionnement. Ledit module de traitement est un logiciel qui est stocké dans une mémoire morte (non représentée) du dispositif DP.

Un tel module de traitement TR est adapté en particulier pour commander principalement :
- le module de communication MC à la réception, en particulier après réception d'une requête en découverte multicast envoyée par le module de contrôle CP, afin d'entraîner le stockage, dans la mémoire vive MV1 du dispositif DP, des identifiants physique et réseau du module de contrôle CP contenus dans ladite requête en découverte,
- le module de communication MC à l'émission, pour que ce dernier émette de façon répétitive vers le module de contrôle CP, dont les identifiants ont été préalablement enregistrés dans la mémoire vive MV1 du dispositif DP, une requête fictive annonçant la connexion sur le réseau local RL d'un dispositif fictif de type passerelle, associé à une url fictive choisie dans l'ensemble d'urls fictives « url2 », « url3 », ..., « urln », tel que stocké dans le mémoire vive MV2 du dispositif DP.

Le module de traitement TR est également adapté pour interpréter la réaction du module de contrôle CP, suite à l'émission d'une requête fictive du type précité, de façon à engendrer une action particulière, au niveau du dispositif DP, qui dépend du type de réaction adopté par le module de contrôle CP.

Ainsi, en cas d'absence de réponse du module de contrôle CP à l'émission d'une requête fictive, le module de traitement TR associe, dans la mémoire vive MV1 du dispositif DP, les identifiants physique et réseau du module de contrôle CP à une valeur numérique correspondant à un état déconnecté du module de contrôle CP. Une telle valeur consiste par exemple en un bit mis à 0.

Ledit module de traitement TR est en outre adapté pour supprimer avantageusement toute action UPnP, telle qu'en particulier « GET », « StartCall » ou « AddPortMapping », susceptible d'avoir été invoquée par le module de contrôle CP auprès du dispositif DP, avant l'émission de la requête fictive.

Les ressources du dispositif DP s'en trouvent par conséquent allégées. Il en résulte également une réduction de l'encombrement du réseau local RL.

A l'inverse, dans le cas où le module de contrôle CP envoie, en réponse à la requête fictive, une requête d'accès au dispositif associé à l'url fictive, laquelle requête est interceptée par le dispositif DP, le module de traitement TR associe, dans la mémoire vive MV1 du dispositif DP, les identifiants physique et réseau du module de contrôle CP à une valeur numérique correspondant à un état connecté du module de contrôle CP. Une telle valeur consiste par exemple en un bit mis à 1.

Dans ce dernier cas, ledit module de traitement TR est en outre adapté pour commander le module de communication MC de façon à ce que ce dernier envoie en réponse au module de contrôle CP un message d'erreur. Un tel message d'erreur est destiné à faire croire au module de contrôle CP que le dispositif fictif auquel ce dernier tente d'accéder présente un dysfonctionnement, de façon à ce que le module de contrôle CP renonce à toute nouvelle tentative d'accès auprès de ce dispositif fictif, ce qui risquerait de surcharger inutilement le réseau local RL.

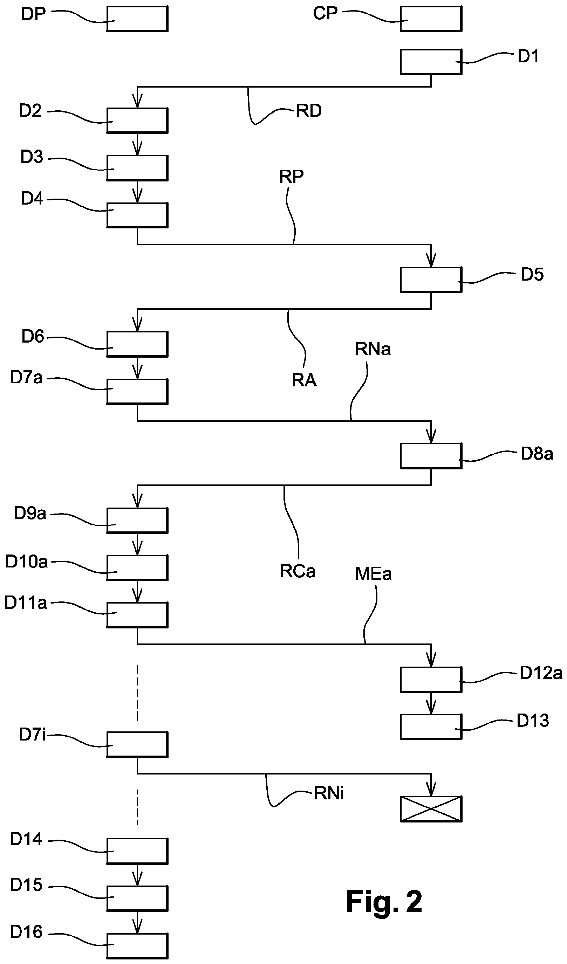

En référence maintenant à la **figure 2****,** on va décrire le procédé de surveillance du module de contrôle conforme à l'invention.

Au cours d'une étape D1, le module de contrôle CP émet, de façon classique, une requête en découverte RD de tous les dispositifs UPnP cibles susceptibles d'être présents dans le réseau local RL, tels qu'en particulier ceux du même type que le dispositif UPnP, DP, qui, dans l'exemple représenté, est une passerelle domestique.

Dans l'exemple représenté, une telle requête en découverte est du type SSDP multicast (de l'anglais « Simple Service Discovery Protocol ») et s'écrit :
"SSDP M-SEARCH urn:schemas-upnp-org:device:InternetGatewayDevice:*".

Au cours d'une étape D2, le module de communication MC du dispositif DP reçoit la requête RD.

Au cours d'une étape D3, le module de traitement TR du dispositif DP extrait de la requête RD reçue les identifiants (adresse MAC, adresse IP, en-tête HTTP USER-AGENT) du module de contrôle CP, de même que l'identifiant du dispositif UPnP cible recherché par ce dernier, « InternetGatewayDevice » dans l'exemple représenté.

Au cours de cette même étape, le module de traitement TR enregistre ces identifiants extraits dans la base de données BD, contenue dans la mémoire vive MV1 du dispositif DP.

Au cours d'une étape D4, le module de communication MC du dispositif DP envoie de façon classique au module de contrôle CP une réponse RP contenant des informations relatives au dispositif DP et destinées à permettre l'accès à ce dernier par le module de contrôle CP.

Dans l'exemple représenté, la réponse RP contient un lien url1 auquel le module de contrôle CP est destiné à accéder pour récupérer l'identifiant InternetGatewayDevice 1 du dispositif DP. La réponse RP s'écrit : « HTTP 200 OK LOCATION: url1 ».

A la suite de l'étape D4, le module de contrôle CP et le dispositif cible DP sont considérés comme ayant été mis en relation l'un avec l'autre.

Au cours d'une étape D5, le module de contrôle CP envoie, de façon classique, une requête RA de déclenchement d'une action UPnP à l'url1. Dans l'exemple représenté, une telle action consiste par exemple en la création d'une règle de NAT dans le dispositif DP. Une telle requête RA consiste par conséquent dans la commande UPnP : « Action UPnP AddPortMapping ».

Au cours d'une étape D6, le module de communication MC du dispositif DP reçoit la requête RA.

Au cours d'une étape D7a, le module de traitement TR extrait de la mémoire vive MV2 une url fictive, telle que par exemple « url2 ».

Au cours de cette même étape, le module de traitement TR active le module de communication MC du dispositif DP pour que ce dernier transmette en réponse au module de contrôle CP, dont les identifiants ont été préalablement mémorisés dans la mémoire vive MV1, une requête RN d'annonce sur le réseau local d'un nouveau dispositif UPnP, en réalité fictif, contenant l'url fictive « url2 » extraite.

La requête RN s'écrit : « SSDP NOTIFY ssdp:alive urn:schemas-upnp-org:device:InternetGatewayDevice:1 url2 ».

Au cours d'une étape D8a, le module de contrôle CP émet une requête d'accès RC à l'url2 de ce dispositif UPnP fictif venant de déclarer sa présence sur le réseau RL.

Une telle requête RC s'écrit « HTTP GET url2 ».

Au cours d'une étape D9a, le module de communication MC du dispositif DP reçoit la requête RC.

Au cours d'une étape D10a, le module de traitement TR interprète la réception de la requête RC comme la preuve que le module de contrôle CP est bien encore connecté au réseau local RL. A cet effet, le module de traitement TR met le statut « connexion/déconnexion » du module de contrôle CP à la valeur 1, dans la base de données BD du dispositif DP.

Au cours d'une étape D11a, le module de traitement TR active le module de communication MC pour que ce dernier envoie au module de contrôle CP un message d'erreur ME, faisant croire à ce dernier que le dispositif UPnP fictif, correspondant au lien url2, ne fonctionne pas. Un tel message d'erreur ME s'écrit : « HTTP 404 Not Found ».

Au cours d'une étape D12a, en réponse à la réception du message d'erreur ME, le module de contrôle CP ne mémorise pas les identifiants du dispositif UPnP fictif.

Une telle disposition permet ainsi d'éviter au module de contrôle CP de renvoyer inutilement de nouvelles requêtes d'accès au dispositif UPnP fictif considéré.

L'étape D7a est réitérée plusieurs fois au cours du temps, grâce à un module de temporisation (non représenté) installé dans le dispositif DP.

A chaque itération D7b, D7c,... de l'étape D7a, une nouvelle url fictive est sélectionnée par le module de traitement TR, dans la mémoire vive MV2 du dispositif DP, pour être ensuite envoyée au module de contrôle CP.

Dans l'exemple représenté, l'itération a lieu à intervalles réguliers, par exemple toutes les heures ou toutes les minutes, selon le type de technologie UPnP employé.

Dans le cas où le module de contrôle CP est toujours connecté au réseau local RL, les étapes D8a à D12a sont également réitérées.

On suppose qu'au cours d'une étape D13, le module de contrôle CP se déconnecte, volontairement ou non. Une telle déconnexion peut par exemple être effectuée à l'initiative de l'utilisateur qui a décidé d'éteindre le dispositif dans lequel est localisé le module de contrôle CP. Une telle déconnexion peut par exemple être également provoquée par un dysfonctionnement du module de contrôle CP ou bien encore du dispositif dans lequel est situé le module de contrôle CP.

On suppose également qu'au cours de l'étape D13, une action UPnP, telle que « Action UPnP AddPortMapping » est en cours de réalisation au niveau du dispositif DP.

Au cours d'une ième itération D7i de l'étape D7a, le module de traitement TR extrait de la mémoire vive MV2 une nouvelle url fictive, par exemple « urli ».

Au cours de cette même étape, le module de traitement TR active le module de communication MC du dispositif DP pour que ce dernier envoie en réponse au module de contrôle CP, dont les identifiants ont été préalablement mémorisés dans la mémoire vive MV1, une requête RNi d'annonce sur le réseau local RL d'un nouveau dispositif UPnP, en réalité fictif, contenant l'url fictive « urli » extraite.

La requête RNi s'écrit : « SSDP NOTIFY ssdp:alive urn:schemas-upnp-org:device:InternetGatewayDevice:1 urli ».

Au cours d'une étape D14, le module de traitement TR du dispositif DP détermine, à l'issue d'une durée prédéterminée, que le module de communication MC n'a reçu aucune requête d'accès de la part du module de contrôle CP. Par conséquent, le module de traitement TR interprète l'absence de réception de requête d'accès comme la preuve que le module de contrôle CP n'est plus connecté au réseau local RL.

A cet effet, au cours d'une étape D15, le module de traitement TR met le statut « connexion/déconnexion » du module de contrôle CP à la valeur 0, dans la base de données BD du dispositif DP.

Au cours d'une étape D16, le module de traitement TR efface l'action UPnP « Action UPnP AddPortMapping » en cours d'exécution.

Une telle disposition a pour principal avantage d'éviter un grossissement non souhaité de la table des règles de NAT de la passerelle dans laquelle est localisé le dispositif DP. Les performances de la passerelle sont ainsi grandement préservées.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Ainsi, selon une autre implémentation possible de l'invention, le dispositif DP pourrait être localisé dans un Media Renderer MR, par exemple un téléviseur, tandis que le module de contrôle CP pourrait être localisé dans un terminal mobile, par exemple un téléphone mobile, relié via une liaison radio (WiFi par exemple) à un Media Server MS, un ordinateur par exemple.

Pour que le téléphone mobile puisse être utilisé en tant que Control Point CP, il comprend une application Control Point UPnP (ex : application PlugPlayer).

On suppose que dans cette implémentation, l'utilisateur est un père de famille ayant par exemple des enfants de moins de 12 ans.

Cet utilisateur sélectionne un contenu vidéo sur son ordinateur pour le faire jouer sur son téléviseur, à l'aide de son téléphone mobile. Or, le contenu vidéo comporte quelques scènes de violence qui pourraient choquer les enfants de l'utilisateur.

Ce dernier se rappelle soudain qu'il a un rendez-vous, éteint son téléphone mobile, puis quitte précipitamment son domicile en oubliant d'arrêter la restitution du contenu vidéo sur son téléviseur.

Grâce à la présence du dispositif DP dans le téléviseur de l'utilisateur, le dispositif DP détecte la déconnexion du téléphone mobile selon le procédé qui vient d'être décrit ci-dessus en référence à la **figure 2****,** ce qui a pour effet d'arrêter immédiatement la diffusion du contenu vidéo, qu'auraient pu malencontreusement visualiser les enfants de l'utilisateur en son absence.

Selon encore une autre implémentation possible, le dispositif DP pourrait être localisé dans un Media Server MS, par exemple un NAS situé dans le réseau domestique de l'utilisateur et comprenant une application spécifique UPnP RA ('Universal Plug and Play Remote Access'), appelée « Remote Access Server ».

Le module de contrôle CP pourrait être localisé quant à lui dans un terminal mobile appartenant à l'utilisateur, par exemple un téléphone mobile, qui comprend également une application UPnP RA.

On suppose que l'utilisateur se trouve chez des amis et diffuse sur le téléviseur de ces derniers, à l'aide de son téléphone mobile doté de l'application UPnP RA, le diaporama des dernières vacances de l'utilisateur qui sont stockées à distance sur son NAS.

A la fin de la séance de diaporama, l'utilisateur éteint son téléphone mobile et rentre chez lui. Grâce à la présence du dispositif DP dans le NAS de l'utilisateur, le NAS détecte la déconnexion du téléphone mobile selon le procédé qui vient d'être décrit ci-dessus en référence à la **figure 2****,** ce qui a pour effet d'arrêter immédiatement la diffusion du diaporama.

Une telle disposition permet ainsi de préserver l'utilisateur de tout risque de manipulation frauduleuse, par des tiers mal intentionnés, de ses photos diffusées à titre privé.

## Revendications

1. Procédé de surveillance d'un module de contrôle (CP) dans un réseau (RL), comprenant les étapes suivantes :
- mise en relation (D1-D4), via le réseau, du module de contrôle (CP) avec un dispositif (DP) présent dans le réseau,
- déconnexion (D13) du module de contrôle (CP),
ledit procédé étant **caractérisé en ce qu'**il comprend une étape de détection de la déconnexion dudit module de contrôle comprenant :
- l'envoi (D7i), depuis le dispositif (DP) présent dans le réseau vers ledit module de contrôle (CP), d'un message (RNi) indiquant la présence dans le réseau d'un dispositif factice, d'un type adapté à être reconnu par le module de contrôle,
- la détermination (D14), au niveau du dispositif présent dans le réseau, de l'absence de réception, en provenance dudit module de contrôle, d'une requête d'accès au dispositif factice.

2. Procédé selon la revendication 1, selon lequel lorsqu'une action a été invoquée par le module de contrôle (CP) auprès du dispositif (DP) présent dans le réseau, postérieurement à l'étape de mise en relation, ladite action est supprimée (D16) par le dispositif présent dans le réseau à la suite de ladite étape de détermination (D14).

3. Procédé selon la revendication 1, selon lequel ladite étape d'envoi est effectuée de façon répétitive (D7a, D7b,...), postérieurement à ladite étape de mise en relation (D1-D4), ledit procédé comprenant les étapes suivantes lorsque le module de contrôle est encore connecté au réseau :
- envoi (D8a), depuis le module de contrôle, d'une requête d'accès (RCa) au dispositif factice,
- interception (D9a), au niveau du dispositif présent dans le réseau, de ladite requête envoyée.

4. Procédé selon la revendication 3, comprenant, à la suite de ladite étape d'interception, l'envoi (D11a), depuis le dispositif présent dans le réseau, d'un message d'erreur (MEa) au module de contrôle (CP).

5. Procédé selon la revendication 3, comprenant, au niveau du dispositif présent dans le réseau, une étape d'enregistrement (D3) d'un identifiant dudit module de contrôle, ledit identifiant étant ensuite associé :
- soit à un état de connexion dudit module de contrôle, à la suite de l'étape d'interception, par le dispositif présent dans le réseau, de ladite requête d'accès au dispositif factice,
- soit à un état de déconnexion, à la suite de l'étape de détermination, par le dispositif présent dans le réseau, de l'absence de réception, en provenance dudit module de contrôle, d'une requête d'accès au dispositif factice.

6. Procédé selon la revendication 1, selon lequel ladite étape de mise en relation (D1-D4) entre le module de contrôle et le dispositif est effectuée selon le protocole UPnP.

7. Dispositif (DP) apte à être mis en relation, via un réseau (RL), avec un module de contrôle (CP), **caractérisé en ce qu'**il comprend des moyens de détection de déconnexion dudit module de contrôle, lesdits moyens comprenant :
- des moyens d'émission (MC) pour envoyer au module de contrôle un message (RNi) indiquant la présence dans le réseau (RL) d'un dispositif factice, d'un type adapté à être reconnu par le module de contrôle,
- des moyens de traitement (TR) pour déterminer l'absence de réception, en provenance dudit module de contrôle, d'une requête d'accès au dispositif factice.

8. Dispositif selon la revendication 7, comprenant en outre des moyens de suppression d'une action invoquée par le module de contrôle (CP) auprès du dispositif (DP), après établissement de leur mise en relation, lesdits moyens de suppression étant activés lorsque les moyens de traitement déterminent l'absence de réception, en provenance dudit module de contrôle, d'une requête d'accès au dispositif factice.

9. Dispositif selon la revendication 7, dans lequel lesdits moyens d'émission (MC) sont adaptés pour envoyer de façon répétitive au module de contrôle, après établissement de la mise en relation de ce dernier avec le dispositif, un message indiquant la présence dans le réseau d'un dispositif factice, ledit dispositif comprenant en outre des moyens d'interception (MC) de toute requête d'accès envoyée au dispositif factice par le module de contrôle, lorsque ce dernier est encore connecté au réseau.

10. Dispositif selon la revendication 9, dans lequel lesdits moyens d'émission (MC) sont en outre adaptés pour envoyer un message d'erreur (ME) au module de contrôle, en réponse à ladite requête d'accès envoyée par ce dernier.

11. Dispositif selon la revendication 9, comprenant en outre des moyens de mémorisation (BD) pour enregistrer au moins un identifiant dudit module de contrôle (CP), ledit identifiant étant associé :
- soit à un état de connexion du module de contrôle, lorsque les moyens d'interception du dispositif interceptent une requête d'accès envoyée par le module de contrôle au dispositif factice,
- soit à un état de déconnexion du module de contrôle, lorsque les moyens de traitement du dispositif déterminent l'absence de réception, en provenance dudit module de contrôle, d'une requête d'accès au dispositif factice.

12. Dispositif selon la revendication 7, dans lequel lesdits moyens d'émission (MC) utilisent le protocole UPnP.

13. Programme d'ordinateur comportant des instructions pour l'exécution des étapes suivantes du procédé de surveillance d'un réseau selon la revendication 1, lorsque ledit programme est exécuté par un ordinateur :
- une étape de détection de la déconnexion dudit module de contrôle comprenant :
- l'envoi (D7i), depuis le dispositif (DP) présent dans le réseau vers ledit module de contrôle (CP), d'un message (RNi) indiquant la présence dans le réseau d'un dispositif factice, d'un type adapté à être reconnu par le module de contrôle,
- la détermination (D14), au niveau du dispositif présent dans le réseau, de l'absence de réception, en provenance dudit module de contrôle, d'une requête d'accès au dispositif factice.

14. Support d'enregistrement lisible par un ordinateur sur lequel est enregistré un programme d'ordinateur comprenant des instructions pour l'exécution des étapes suivantes du procédé de surveillance d'un réseau selon la revendication 1, lorsque ledit programme est exécuté par un ordinateur :
- une étape de détection de la déconnexion dudit module de contrôle comprenant :
- l'envoi (D7i), depuis le dispositif (DP) présent dans le réseau vers ledit module de contrôle (CP), d'un message (RNi) indiquant la présence dans le réseau d'un dispositif factice, d'un type adapté à être reconnu par le module de contrôle,
- la détermination (D14), au niveau du dispositif présent dans le réseau, de l'absence de réception, en provenance dudit module de contrôle, d'une requête d'accès au dispositif factice.

## Patentansprüche

1. Verfahren zur Überwachung eines Steuerungsmoduls (CP) in einem Netz (RL), umfassend die folgenden Schritte:
- Herstellung einer Verbindung (D1-D4) des Steuerungsmoduls (CP) mit einer in dem Netz vorhandenen Vorrichtung (DP) über das Netz,
- Trennung des Anschlusses (D13) des Steuerungsmoduls (CP), wobei das Verfahren **dadurch gekennzeichnet ist, dass** es einen Schritt der Erfassung der Trennung des Anschlusses des Steuerungsmoduls umfasst, umfassend:
- das Senden (D7i) einer Nachricht (RNi) von der im Netz vorhandenen Vorrichtung (DP) zu dem Steuerungsmodul (CP), welche das Vorhandensein einer Scheinvorrichtung im Netz anzeigt, die dazu geeignet ist, von dem Steuerungsmodul erkannt zu werden,
- im Bereich der im Netz vorhandenen Vorrichtung die Feststellung (D14) des Fehlens eines Erhalts einer Zugriffsanfrage an die Scheinvorrichtung, die von dem Steuerungsmodul kommt.

2. Verfahren nach Anspruch 1, bei dem, wenn eine Aktion von dem Steuerungsmodul (CP) bei der im Netz vorhandenen Vorrichtung (DP) nach dem Schritt der Verbindungsherstellung beantragt wurde, die Aktion von der im Netz vorhandenen Vorrichtung nach dem Feststellungsschritt (D14) unterdrückt wird (D16).

3. Verfahren nach Anspruch 1, bei dem der Schritt des Sendens auf wiederholte Weise (D7a, D7b, ...) nach dem Schritt der Verbindungsherstellung (D1-D4) erfolgt, wobei das Verfahren die folgenden Schritte umfasst, wenn das Steuerungsmodul noch an das Netz angeschlossen ist:
- Senden (D8a) einer Zugriffsanfrage (RCa) an die Scheinvorrichtung von dem Steuerungsmodul,
- Abfangen (D9a) der gesandten Anfrage im Bereich der im Netz vorhandenen Vorrichtung.

4. Verfahren nach Anspruch 3, umfassend nach dem Schritt des Abfangens das Senden (D11a) einer Fehlermeldung (MEa) an das Steuerungsmodul (CP) von der im Netz vorhandenen Vorrichtung.

5. Verfahren nach Anspruch 3, umfassend im Bereich der im Netz vorhandenen Vorrichtung einen Schritt der Registrierung (D3) einer Kennung des Steuerungsmoduls, wobei die Kennung sodann zugeordnet wird:
- entweder einem Anschlusszustand des Steuerungsmoduls nach dem Schritt des Abfangens der Zugriffsanfrage an die Scheinvorrichtung durch die im Netz vorhandene Vorrichtung,
- oder einem Trennungszustand nach dem Schritt der Feststellung des Fehlens eines Erhalts einer Zugriffsanfrage an die Scheinvorrichtung von dem Steuerungsmodul durch die im Netz vorhandene Vorrichtung.

6. Verfahren nach Anspruch 1, bei dem der Schritt der Herstellung einer Verbindung (D1-D4) zwischen dem Steuerungsmodul und der Vorrichtung nach dem UPnP-Protokoll erfolgt.

7. Vorrichtung (DP), die geeignet ist, über ein Netz (RL) mit einem Steuerungsmodul (CP) in Verbindung gebracht zu werden, **dadurch gekennzeichnet, dass** sie Mittel zur Erfassung der Trennung des Anschlusses des Steuerungsmoduls umfasst, wobei die Mittel umfassen:
- Sendemittel (MC), um an das Steuerungsmodul eine Nachricht (RNi) zu senden, die das Vorhandensein einer Scheinvorrichtung im Netz (RL), die geeignet ist, von dem Steuerungsmodul erkannt zu werden, anzeigt,
- Bearbeitungsmittel (TR), um das Fehlen eines Empfangs einer Zugriffsanfrage an die Scheinvorrichtung von dem Steuerungsmodul festzustellen.

8. Vorrichtung nach Anspruch 7, ferner umfassend Mittel zur Unterdrückung einer Aktion, die von dem Steuerungsmodul (CP) bei der Vorrichtung (DP) nach Herstellung ihrer Verbindung beantragt wurde, wobei die Unterdrückungsmittel aktiviert werden, wenn die Bearbeitungsmittel das Fehlen eines Erhalts einer Zugriffsanfrage an die Scheinvorrichtung von dem Steuerungsmodul feststellen.

9. Vorrichtung nach Anspruch 7, bei der die Sendemittel (MC) dazu vorgesehen sind, auf wiederholte Weise an das Steuerungsmodul nach Herstellung der Verbindung dieses letztgenannten mit der Vorrichtung eine Nachricht zu senden, die das Vorhandensein einer Scheinvorrichtung im Netz anzeigt, wobei die Vorrichtung ferner Mittel zum Abfangen (MC) jeder Zugriffsanfrage, die an die Scheinvorrichtung von dem Steuerungsmodul gesandt wird, wenn dieses letztgenannte noch an das Netz angeschlossen ist, umfasst.

10. Vorrichtung nach Anspruch 9, bei der die Sendemittel (MC) ferner dazu vorgesehen sind, eine Fehlermeldung (ME) an das Steuerungsmodul als Antwort auf die von diesem letztgenannten gesandte Zugriffsanfrage zu senden.

11. Vorrichtung nach Anspruch 9, ferner umfassend Speichermittel (BD), um mindestens eine Kennung des Steuerungsmoduls (CP) zu registrieren, wobei die Kennung zugeordnet ist:
- entweder einem Anschlusszustand des Steuerungsmoduls, wenn die Abfangmittel der Vorrichtung eine Zugriffsanfrage abfangen, die an die Scheinvorrichtung von dem Steuerungsmodul gesandt wurde,
- oder einem Trennungszustand des Steuerungsmoduls, wenn die Bearbeitungsmittel der Vorrichtung das Fehlen eines Erhalts einer Zugriffsanfrage an die Scheinvorrichtung von dem Steuerungsmodul feststellen.

12. Vorrichtung nach Anspruch 7, bei der die Sendemittel (MC) das UPnP-Protokoll verwenden.

13. Computerprogramm, umfassend Befehle für die Ausführung der folgenden Schritte des Verfahrens zur Überwachung eines Netzes nach Anspruch 1, wenn das Programm von einem Computer ausgeführt wird:
- einen Schritt der Erfassung der Trennung des Anschlusses des Steuerungsmoduls, umfassend:
- das Senden (D7i) einer Nachricht (RNi) von der im Netz vorhandenen Vorrichtung (DP) zu dem Steuerungsmodul (CP), welche das Vorhandensein einer Scheinvorrichtung im Netz anzeigt, die dazu geeignet ist, von dem Steuerungsmodul erkannt zu werden,
- im Bereich der im Netz vorhandenen Vorrichtung die Feststellung (D14) des Fehlens eines Erhalts einer Zugriffsanfrage an die Scheinvorrichtung, die von dem Steuerungsmodul kommt.

14. Aufzeichnungsträger, der von einem Computer lesbar ist, auf dem ein Computerprogramm registriert ist, umfassend Befehle für die Ausführung der folgenden Schritte des Verfahrens zur Überwachung eines Netzes nach Anspruch 1, wenn das Programm von einem Computer ausgeführt wird:
- einen Schritt der Erfassung der Trennung des Anschlusses des Steuerungsmoduls, umfassend:
- das Senden (D7i) einer Nachricht (RNi) von der im Netz vorhandenen Vorrichtung (DP) zu dem Steuerungsmodul (CP), welche das Vorhandensein einer Scheinvorrichtung im Netz anzeigt, die dazu geeignet ist, von dem Steuerungsmodul erkannt zu werden,
- im Bereich der im Netz vorhandenen Vorrichtung die Feststellung (D14) des Fehlens eines Erhalts einer Zugriffsanfrage an die Scheinvorrichtung, die von dem Steuerungsmodul kommt.

## Claims

1. Method for monitoring a control module (CP) in a network (RL), comprising the following steps:
- connection (D1-D4), via the network, of the control module (CP) to a device (DP) present in the network,
- disconnection (D13) of the control module (CP), said method being **characterized in that** it comprises a step of detecting the disconnection of said control module, comprising:
- sending (D7i), from the device (DP) present in the network to said control module (CP), of a message (RNi) indicating the presence, in the network, of a dummy device of a kind designed to be recognized by the control module,
- determination (D14), by the device present in the network, of the absence of reception, originating from said control module, of a request for access to the dummy device.

2. Method according to Claim 1, wherein, when an action has been invoked by the control module (CP) on the device (DP) present in the network, subsequent to the connection step, said action is deleted (D16) by the device present in the network following said determination step (D14).

3. Method according to Claim 1, wherein said sending step is carried out repeatedly (D7a, D7b,...), subsequent to said connection step (D1-D4), said method comprising the following steps when the control module is still connected to the network:
- sending (D8a), from the control module, of a request for access (RCa) to the dummy device,
- interception (D9a), by the device present in the network, of said sent request.

4. Method according to Claim 3, comprising, following said interception step, sending (D11a), from the device present in the network, of an error message (MEa) to the control module (CP).

5. Method according to Claim 3, comprising, in the device present in the network, a step (D3) of recording an identifier of said control module, said identifier then being associated:
- either with a connection state of said control module, following the step of interception, by the device present in the network, of said request for access to the dummy device,
- or with a disconnection state, following the step of determination, by the device present in the network, of the absence of reception, originating from said control module, of a request for access to the dummy device.

6. Method according to Claim 1, wherein said connection step (D1-D4) between the control module and the device is performed in accordance with the UPnP protocol.

7. Device (DP) able to be connected, via a network (RL), to a control module (CP), **characterized in that** it comprises means for detecting the disconnection of said control module, said means comprising:
- transmission means (MC) for sending, to the control module, a message (RNi) indicating the presence, in the network (RL), of a dummy device of a kind designed to be recognized by the control module,
- processing means (TR) for determining the absence of reception, originating from said control module, of a request for access to the dummy device.

8. Device according to Claim 7, furthermore comprising means for deleting an action invoked by the control module (CP) on the device (DP), after establishment of their connection, said deletion means being activated when the processing means determine the absence of reception, originating from said control module, of a request for access to the dummy device.

9. Device according to Claim 7, wherein said transmission means (MC) are designed to repeatedly send, to the control module, after establishment of the connection of the latter to the device, a message indicating the presence, in the network, of a dummy device, said device furthermore comprising means (MC) for intercepting any request for access sent to the dummy device by the control module, when the latter is still connected to the network.

10. Device according to Claim 9, wherein said transmission means (MC) are furthermore designed to send an error message (ME) to the control module in response to said request for access sent by the latter.

11. Device according to Claim 9, furthermore comprising storage means (BD) for recording at least one identifier of said control module (CP), said identifier being associated:
- either with a connection state of the control module, when the interception means of the device intercept a request for access sent by the control module to the dummy device,
- or with a disconnection state of the control module, when the processing means of the device determine the absence of reception, originating from said control module, of a request for access to the dummy device.

12. Device according to Claim 7, wherein said transmission means (MC) use the UPnP protocol.

13. Computer program including instructions for executing the following steps of the method for monitoring a network according to Claim 1, when said program is executed by a computer:
- a step of detecting the disconnection of said control module, comprising:
- sending (D7i), from the device (DP) present in the network to said control module (CP), of a message (RNi) indicating the presence, in the network, of a dummy device of a kind designed to be recognized by the control module,
- determination (D14), by the device present in the network, of the absence of reception, originating from said control module, of a request for access to the dummy device.

14. Computer-readable recording medium on which is recorded a computer program including instructions for executing the following steps of the method for monitoring a network according to Claim 1, when said program is executed by a computer:
- a step of detecting the disconnection of said control module, comprising:
- sending (D7i), from the device (DP) present in the network to said control module (CP), of a message (RNi) indicating the presence, in the network, of a dummy device of a kind designed to be recognized by the control module,
- determination (D14), by the device present in the network, of the absence of reception, originating from said control module, of a request for access to the dummy device.
